# EUROPEAN PATENT APPLICATION

(11) **EP 2 472 458 A1**
(43) Date of publication of application: **04.07.2012**
(21) Application number: 11161681.9
(22) Date of filing: 08.04.2011
(51) Int. Cl.: G06Q 10/10, G06Q 10/06

(54) **Apparatus, and associated method, for providing indication of rule-based activity at an electronic device**

(30) Priority: 30.12.2010 US 201061428757 P; 26.01.2011 US 14397
(71) Applicant: Research In Motion Limited, Waterloo, ON N2L 3W8 (CA)
(72) Inventor: Balannik, Vadim, Rolling Meadows IL 60008 (US); Ellis, Patrick Dell, Rolling Meadows IL 60008 (US)
(74) Representative: Roberts, Gwilym Vaughan

(57) **Abstract**

An apparatus, and an associated method, that causes indication to be made to alert a user or other viewer of a communication device that a message, notification, or other information indicia has been acted upon by a rule of a rule set. A determiner determines that the indicia has been acted upon by a rule of the rule set and an indication is caused to be generated. The indication is displayed at a display device, together with an indication of the associated message, notification, or indicia, thereby to alert the viewer of the action taken upon the indicia.

## Description

### Cross-Reference to Related Application

This application claims benefit of, and incorporates in its entirety by reference U.S. Provisional Patent Application No. 61/428,757 titled "Apparatus, And Associated Method, For Providing Indication Of Rule-Based Activity At An Electronic Device," filed on December 30, 2010.

The present disclosure relates generally to a manner by which to provide an indication of application of a rule to a message, notification, or other information indicia at an electronic device, such as a wireless device, a tablet device, sit-top box, or any of various other devices that receive or send data messages, media, or other content. More particularly, the present disclosure relates to an apparatus, and an associated method, by which to display an indication that a rules-based action has been taken on a message, notification, or other information indicia.

A viewer of the indication is able immediately to be made aware that the action has been taken on, or on behalf of, the message, notification, content or other information indicia. And, the viewer is thereby alerted that the message, notification, content or other information indicia contains information that matches the parameter of a rule and that has been acted upon by the rule.

### Background

Advancements in communication technologies have permitted the development and deployment of new types of communication systems that provide for communication services that previously had been unavailable or available at very high cost. For instance, digital communication techniques permitted as a result of such advancements are used to efficiently communicate data, typically by formatting the information into packets and sending the packets between the sending and receiving stations. Digital communication techniques are used pursuant to communication services that communicate data to perform both real-time and non-real-time communication services.

Mobile communication services, such as communication services provided by way of a cellular communication system, or cellular-like communication system, are exemplary of the new communication systems that have been developed and deployed, taking advantage of advancements in communication technologies, including digital communication techniques. While cellular communication systems were first used primarily pursuant to voice communication services, cellular communication systems, and cellular-like communication systems, increasingly are used to perform data communication services in which large amounts of data are communicated.

A wireless device, oftentimes used in a radio communication system, is typically of small dimensions, permitting convenient carriage of the device and ready availability for use when performance of a communication service is desired. Sometimes, the wireless devices are multi-functional devices, capable of performing multiple communications, and other, functions. For instance, wireless devices are often times constructed to be capable of performing both voice communication services and data-message communication services that permit, e.g., email-message communications and instant-message communications.

Pursuant to performance of these, as well as other, communication services, information relating to the communication services is provided at an output element of a user interface of the wireless device. The output element comprises, for instance, a display device, such as a liquid crystal display, that displays various information related to information indicia, such as data messages and voice-service notifications. The information is, e.g., displayed in the form a listing that permits a viewer, such as a user of the wireless device, to view the information related to the communication service. For instance, with respect to an email-message communication service, a listing sometimes takes the form of a message inbox, message outbox, or other analogous listing. And, information relating to voice communications, such as voicemail messages, is sometimes also displayed in a voice-mail listing, e.g., a visual voice mail listing. Information related to other information indicia is analogously presented to a viewer.

Other devices also are used pursuant to the communication of content and other information indicia amenable for forming a list of such indicia. Tablet computers, personal computers, set top boxes, and other devices that communicate media or content provided analogous displays.

Sometimes, rules are created, including rules created by a user of a communication device at which the listings are displayed, relating to actions that are to be taken on specific information that might be received or sent by the communication device. Such rules are created by the user of the device or are created by others, such as IT personnel of an enterprise that controls use of the device.

It is in light of this background information related to the communications that the significant improvements of the present disclosure have evolved.

### Brief Description of the Drawings

Figure 1 illustrates a functional block diagram of a communication system having a communication device that operates pursuant to operation of an implementation of the present disclosure.

Figure 2 illustrates a representation of an exemplary display generated pursuant to operation of an implementation of the present disclosure.

Figure 3 illustrates a representation, similar to that shown in Figure 2, but of another exemplary display also generated pursuant to operation of an implementation of the present disclosure.

Figure 4 illustrates a process diagram representative of the process of operation of an implementation of the present disclosure.

Figure 5 illustrates a method flow diagram representative of the method of operation of an implementation of the present disclosure.

### Detailed Description

The present disclosure, accordingly, advantageously provides an apparatus, and an associated method, for providing an indication of application of a rule to a message, notification, or other information indicia at an electronic device, such as a wireless device, tablet device, personal computer or other computing station, set top box or other device capable of communication of messages, notifications, media, other content, or other information indicia.

Through operation of an implementation of the present disclosure, a manner is provided by which to display an indication that a rules-based action has been taken with respect to the message, notification, or other information indicia.

In one aspect of the present disclosure, a viewer of the display is able immediately to know that the action has been taken on, or on behalf of, the message, notification, content or other information indicia. The viewer, by viewing the display, is alerted that the message, notification, content or other information indicia contains information that matches the parameter of a rule of a set of rules.

In another aspect of the present disclosure, determination is made of when information indicia has been acted upon according to a rule of a rule set with respect to a communication operation. The information indicia is acted upon by a rule if the information indicia meets a parameter of a rule of the rule set. A device rules engine, for instance, provides an indication that an information indicia has been acted upon. The rules engine, for instance, analyzes each information indicia, and processes the information indicia according to a rule if the information indicia is determined to meet a parameter of a rule of a rule set by, or provided to, the rules engine. The rules engine acts upon, or processes, the information indicia in a manner defined by the rule when the information indicia meets one or more parameters of the rule. When a rules set comprises a plurality of rules, the rules engine determines whether the message, notification, or other information indicia meets a parameter of any of the rules of the rules set.

In another aspect of the present disclosure, responsive to determination that the information indicia has been acted upon in conformity with a rule, an indication is generated for display in human perceptible form that the information indicia has been acted upon.

In another aspect of the present disclosure, a display device displays the indication that the information indicia has been acted upon by the rule. The indication is displayed, e.g., together with an identification of the associated information indicia.

In another aspect of the present disclosure, a listing is generated that includes entries identifying information indicia. When an information indicia has been acted upon by a rule, an indication that a rule has been applied to the information indicia is displayed to alert a viewer of the listing that the information indicia has been acted upon by a rule.

In another aspect of the present disclosure, the information indicia includes a header part and a body part. A rule pertains to the header part, the body part, or both the header part and the body part. A determination is made as to whether a parameter of a rule pertains to the information indicia. If so, the information indicia is acted upon in conformity with the rule. And, an indication is caused to be generated that is used to alert a viewer that a rules-based action has been taken upon the information indicia. A viewer is able thereby quickly to ascertain that an information indicia has been acted upon by a rule of a rules set.

In another aspect of the present disclosure, the indication that is caused to be generated comprises an iconographic indication. The iconographic indication is known to the user indicates to the user that the information indicia has been acted upon by a rule.

In another aspect of the present disclosure, the iconographic indication is displayed when the parameters of a rule are matched by information contained within the information indicia. When the information indicia comprises a message typical actions associated with the message, such as opening, marking as un-read, etcetera, also includes an action to open an associated rule.

Because the user of the user of the device is made aware that an action has been taken on the message or other information indicia, the user is better able quickly to be made aware that action has been taken on the information indicia.

In these and other aspects, therefore, an input apparatus, and an associated method, is provided for an electronic device that acts upon information indicia according, when applicable, to at least a first rule of a rule set. A determiner is configured to determine when the information indicia has been acted upon according to at least the first rule. An indicator is configured, responsive to determination by the determiner that the received information indicia has been acted upon according to the as least the first rule, to cause generation of an indication in human perceptible form that the information indicia has been acted upon according to the at least the first rule.

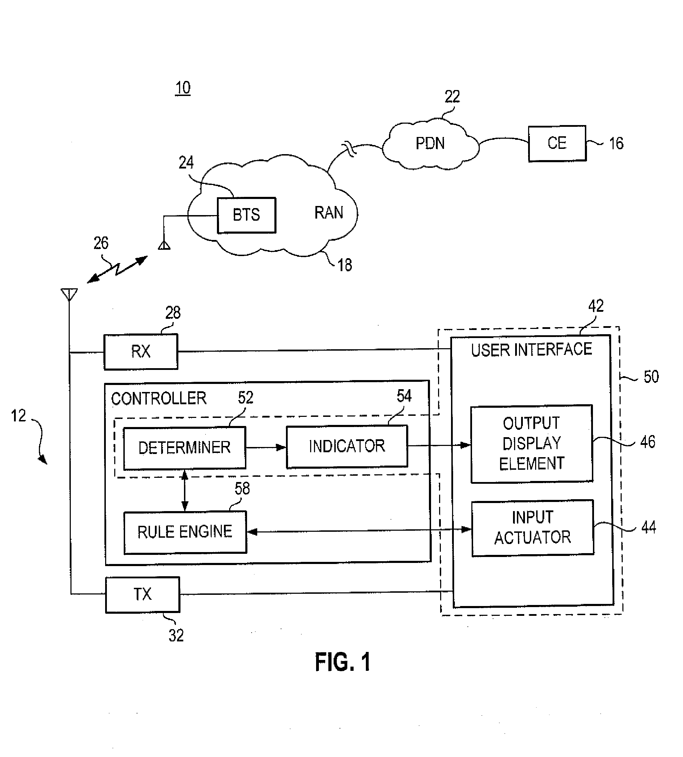

Turning first, therefore, to Figure 1, a communication system, shown generally at 10, provides for communications with communication devices, here between a wireless device 12 and a communication endpoint (CE) 16. In the exemplary implementation, the communication system comprises a cellular communication system operable in general conformity with an operating specification. More generally, the communication system 10 is representative of any of various communication systems or communication schemes, both radio communications systems and wired communication systems, such as computer network systems, in which information is communicated between communication stations. The following description shall describe operation with respect to the exemplary implementation in which the communication system comprises a radio communication system, it should be understood that operation of other types of communication systems can be analogously described and operation of an implementation of the present disclosure is analogously operable in such other communication systems. The device 12 and endpoint 16 are, e.g., alternately implemented as computer stations in a computer network system. Or, e.g., the device 12 forms a tablet device, a set top box, or any of various other devices that act upon data, content, or other information indicia.

The communication system 10 includes a network part, here represented by a radio access network (RAN) 18 and a packet data network (PDN) 22. The networks 18 and 22 are operable in conventional manner and are connected, e.g., by a gateway (not shown in Figure 1). And, the radio access network, in conventional manner, includes a plurality of spaced-apart, radio base stations of which the base transceiver station (BTS) 24 is exemplary. Communication channels are defined upon a radio air interface represented by the arrow 26. Signals are formatted and sent upon channels defined upon the radio air interface in conformity with the communication standard pursuant to which the communication system is operable.

Information originated at the communication endpoint 16 for communication to the device 12 is routed through the networks 22 and 18 and then sent upon channels defined upon the radio air interface for delivery to the device 12. And, information originated at the device 12 for communication to the communication endpoint 16 is sent upon radio channels defined upon the radio air interface and then routed through the networks 18 and 22 for delivery to the communication endpoint.

The wireless device 12 includes transceiver circuitry, here represented by a receive part (Rx) 28 and a transmit part (Tx) 32. The transceiver circuitry transceives signals with a base transceiver station, such as the base transceiver station 24 of the radio access network 18.

The wireless device further includes a controller 36 that controls various aspects of operation of the device 12. The wireless device further includes a user interface 42. The user interface includes both an input actuator 44 and an output display element 46. In one implementation, the output display element includes a touch-screen display, and the input actuator 44 forms part of the touch-screen display.

The controller 36 includes portions of an apparatus 50 of an implementation of the present disclosure, here including a determiner 52 and an indicator 54. The elements 52 and 54 are functionally represented, implementable in any desired manner, including, for instance, hardware elements, firmware elements, software algorithms implementable by processing circuitry, and combinations thereof. The apparatus 50 further includes the user interface 42. In operation, the apparatus provides for notification to a viewer, such as a user of the device 12, that a rule has been applied to an information indicia, such as a message communicated during operation of the communication system or communication notification to alert the user or viewer of application of a rule to the information indicia.

The device 12 also includes a rules engine 58, here also embodied at the controller 36. A rules cache 60 is accessible by the rules engine. The rules cache stores a set of rules, comprising of one or more rules that defines a manner by which to act upon information indicia, such as a message or notification received at, or to be transmitted by, the device 12. And, each rule contains one or more parameters. If the information indicia meets a parameter of the rule, the rules engine acts upon the information indicia according to the instructions or constraints of the rule.

The determiner 52 determines whether an information indicia has been acted upon by a rule of the rule set. Here, the determiner makes the determination based upon information obtained from the rules engine 58. And, the determiner provides an indication of the determination to the indicator 54. The indicator causes generation of an indication at the display element 46 of the application of the rule to an associated information indicia. In the exemplary implementation, the indication that the indicia has been acted on by a rule of the rule set is displayed in proximity to an indication of, or other information associated with, the information indicia. For instance, received email messages are displayed in an email inbox listing, and an email message upon which a rule has been applied is listed in the listing together with the indication caused to be generated by the indicator 54. Thereby, the user or other viewer of the output element 46 is provided with ready indication that the email message has been operated upon by a rule of the rule set. And, thereby, the user is alerted that the content of the message, either a header part or a body part, or both, is of values, or other characteristics, that invoke the operation of a rule.

In one implementation, the indication further identifies the rule that operates upon the indicia. And, in one implementation, responsive to the generation and display of the indication, the user or other viewer is able to request display of the specific rule that acted upon the message, notification, or other indicia. The request is provided to the rules engine 58, and the rules engine causes the determiner 52 to determine the identity of the specific rule, the indicator 54 causes generation of a display that identifies the specific rule, and the indication of the specific rule is caused to be displayed at the display element 46. In a touch screen implementation, the user requests the additional information by inputting a touch command at the displayed indication at the display element.

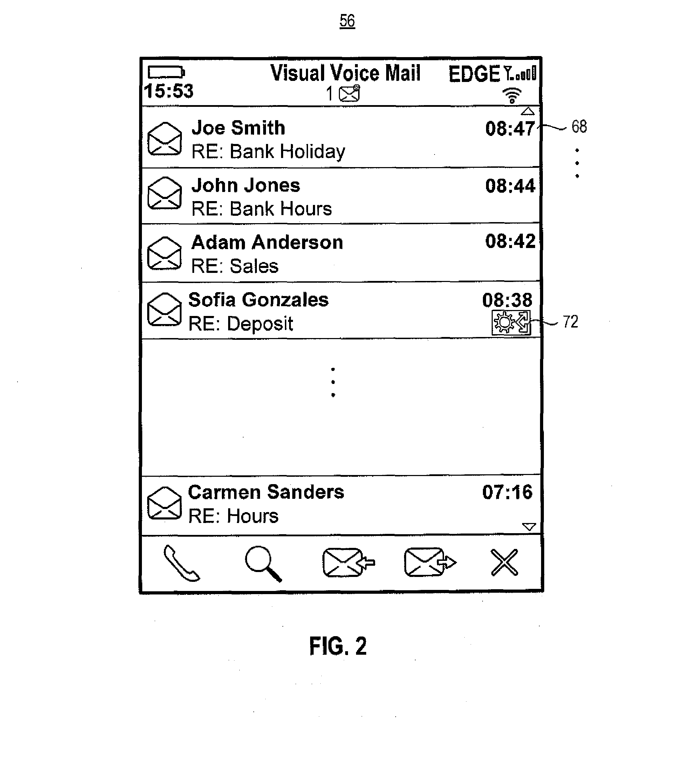

Figure 2 illustrates a representation of an exemplary display 56 of a listing displayed on the output element 46 that forms part of the user interface 42, shown in Figure 1. Here, the display forms an email listing that lists emails, or other data messages, received at the device 12, and here forming an email inbox. Message out boxes, etc. are analogously represented. In conventional manner, the listing includes entries that identify the sender of the message and include a subject line in which the subject of the message is identified. Here, the listing includes a plurality of entries 68 listed in order of delivery to the wireless device. And, entries of messages upon which a rule has been applied are identified by an iconographic indication 72. The indication 72 is positioned together with the associated entry of the message, thereby to alert a viewer of the output element and the display thereon of the application of a rule to the associated message.

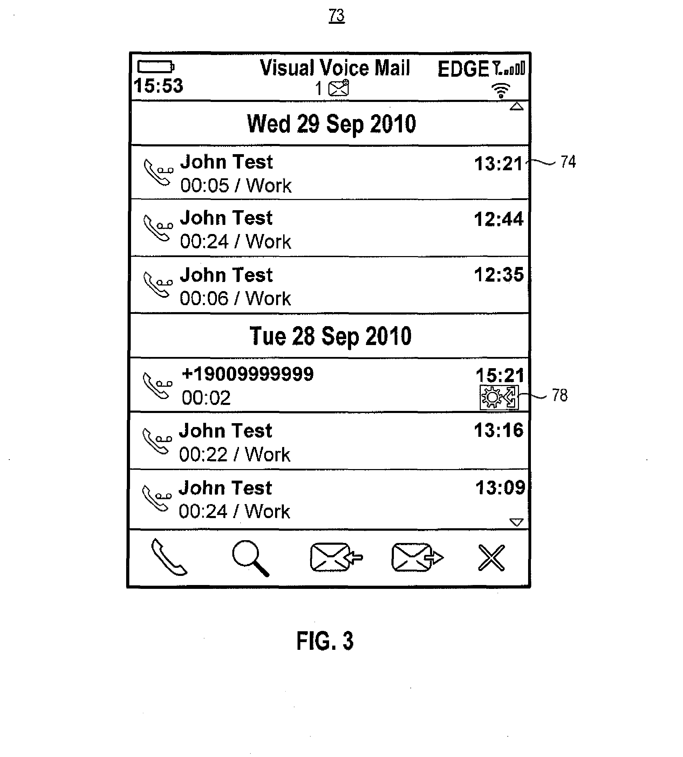

Figure 3 illustrates another exemplary display listing displayed at the output element 46. Here, the listing is a listing of voicemail messages, i.e., notifications of received voicemails. The listing here comprises a visual voicemail listing. Each entry 74 in the listing is representative of a receive voicemail. The entry identifies the message, by alphanumeric identifier, such as a name or telephone number, the duration of the message, and the time at which the message was delivered. The notifications also comprise information indicia subject to application of a rule if the message meets a parameter of a rule of the rule set. Entries on the listing that are acted upon buy a rule of the rule set also include an iconographic indication 78 identifying that the associated message notification has been acted upon by a rule of the set of rules. Thereby, a viewer of the listing is able quickly to ascertain that the message associated with the notification has been acted upon by a rule of the rule set. Thereby, the user is able immediately to be made aware that the message associated with the notification has been acted upon by application of a rule to the message.

In the exemplary illustration shown in Figure 3, the rule is applied to a terminating call that is unknown to the user, that is, does not match a telephone number stored in an address book maintained at the device 12. The rule parameter is, e.g., an originating telephone number that is not contained in the address book of the terminating device 12. And, the rule applied to the terminating call is to rout the call to voicemail without annunciating the terminating call.

Other types of information indicia are analogously identified with an indication when a rule has been applied to the indicia. In an implementation in which the device 12 comprises a set top box, exemplary operation provides for comparison of received content with parameters of rules and acting upon the content if the parameter of the rule is met. For instance, a rule might be to include all content that has been nominated for a Grammy Award in a favorites list. A listing of the content would include the iconographic indication that content meeting the rule parameter has been acted upon. A set top box, in some implementations, is also useable to send and receive messages. And listings are also created, as described previously, pursuant to an implementation of the present disclosure.

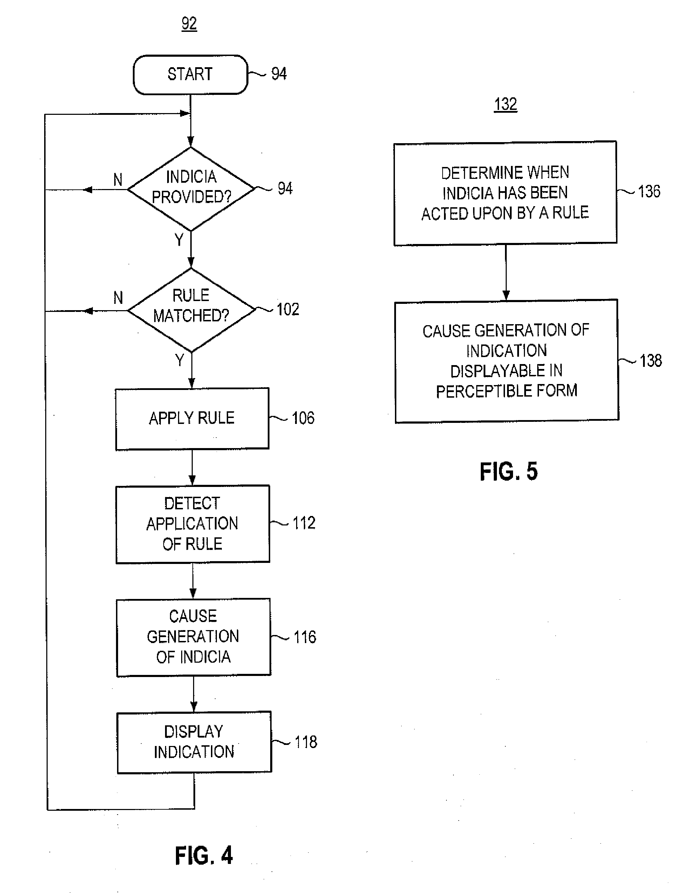

Figure 4 illustrates a process diagram 92 representative of the process of operation of an implementation of the present disclosure. The process 92 provides for indication to a viewer of an output element of an electronic device, such as the wireless device 12 shown in Figure 1, when a rule is applied to a message, notification, or other information indicia. By providing the indication to the viewer, the viewer is able to quickly to ascertain that a rule has been applied to the associated information indicia.

After entry at the start block 94, a determination is made at the decision block 98 as to whether a message, notification, or other information indicia has been provided, either an incoming message, notification or indicia or an outgoing message, notification, or other indicia. If not, the no branch is taken back to the decision block 98. Otherwise, if an indicia has been provided, the yes branch is taken to the decision block 102. A determination is made whether the message, notification, or other indicia matches a rule parameter of a rule of a rule set. If not, the no branch is taken back to the decision block 98. If, conversely, the indicia matches a rule parameter of a rule, the yes branch is taken to the block 106, and the rule is applied to the message, notification, or other indicia.

Then, and as indicated by the block 112, detection is made that the rule has been applied. Such detection is made, for instance, by a rules engine providing an indication of the application of the rule to the indicia. Then, and as indicated by the block 116, an indication is caused to be generated that the message, notification, or other indicia has been acted upon by a rule of the rule set. And, as indicated by the block 118, the indication is displayed in a listing of the messages, notifications, or other indicia. Then, a path is taken back to the block 98.

Figure 5 illustrates a method flow diagram, shown generally at 132, representative of the method of operation of an implementation of the present disclosure. The method facilitates operational notification of operation of an electronic device that acts upon received information indicia, when applicable, according to at least a first rule of a rule set.

First, and as indicated by the block 136, a determination is made as to when the information indicia has been acted upon according to the at least the first rule. Then, and as indicated by the block 138, an indication, in human perceptible form, is caused to be generated, responsive to determination that the received information indicia has been acted upon according to the at least the first rule to indicate that the information indicia has been acted upon according to the at least the first rule.

Thereby, a user or other viewer is able quickly to ascertain that a rule has been applied to a message, notification, or other indicia received or generated pursuant to operation of a communication device of a communication system.

Presently implementations of the disclosure and many of its improvements and advantages have been described with a degree of particularity. The description is of preferred examples of implementing the disclosure, and the description of examples is not necessarily intended to limit the scope of the disclosure. The scope of the disclosure is defined by the following claims.

## Claims

1. An apparatus for an electronic device that acts upon information indicia according, when applicable, to at least a first rule of a rule set, the apparatus comprising:
a determiner configured to determine when the information indicia has been acted upon according to the at least the first rule; and
an indicator configured, responsive to determination by the determiner that the information indicia has been acted upon according to the at least first rule, to cause generation of an indication in human perceptible form that the information indicia has been acted upon according to the at least the first rule.

2. The apparatus of claim 1 wherein the indicator is configured to cause generation of an iconographic image indicating that the information indicia been acted upon according to the at least the first rule.

3. The apparatus of claim 1 wherein the information indicia comprises a header part and wherein the determiner is configured to determine when the header part of the information indicia matches a rule parameter of the at least the first rule of the rule set.

4. The apparatus of claim 1 wherein the information indicia comprises a body part and wherein the determiner is configured to determine when the body part of the information indicia matches a rule parameter of the at least the first rule of the rule set.

5. The apparatus of claim 1 wherein the information indicia comprises a data message and wherein the determiner is configured to determine when the data message matches a rule parameter of the at least the first rule of the rule set.

6. The apparatus of claim 1 wherein the information indicia comprises a message notification and wherein the determiner is configured to determine when the message notification matches a rule parameter of the at least the first rule of the rule set.

7. The apparatus of claim 1 wherein the information indicia comprises terminating information terminating at the electronic device and wherein the determiner is configured to determine when the terminating data message matches a rule parameter of the at least the first rule of the rule set.

8. The apparatus of claim 1 wherein the information indicia comprises originating information originating at the electronic device and wherein the determiner is configured to determine when the originating information matches a rule parameter of the at least the first rule of the rule set.

9. The apparatus of claim 1 further comprising a logger configured to log each rule that is determined by the determiner to have acted upon the information indicia.

10. The apparatus of claim 1 further comprising a logger configured to log, for each rule of the rule set, an information indicia that is acted upon.

11. A method for facilitating operational notification of operation of an electronic device that acts upon information indicia, when applicable, according to at least a first rule of a rule set, the method comprising:
determining when the information indicia has been acted upon according to the at least the first rule; and
causing generation, responsive to determination during the determining that the information indicia has been acted upon according to the at least the first rule, of an indication in human perceptible form that the information indicia has been acted upon according to the at least the first rule.

12. The method of claim 11 wherein the causing generation comprises causing generation of an iconographic image indicating that the information indicia has been acted upon according to at least the first rule.

13. The method of claim 11 wherein the determining comprises determining when the information indicia matches a rule parameter of the at least the first rule of the rule set.

14. The method of claim 11 further comprising logging each rule of the rule set determined during the determining to have acted upon the information indicia.

15. The method of claim 11 further comprising logging, for each rule of the rule set, an information indicia that is acted upon.
